# EUROPEAN PATENT SPECIFICATION

(11) **EP 0 594 145 B1**
(45) Date of publication and mention of the grant of the patent: **26.01.2000**
(21) Application number: 93116940.3
(22) Date of filing: 20.10.1993
(51) Int. Cl.: C08G 73/22, C08G 73/08, C08G 81/00

(54) **Block copolymers containing blocks of polybenzazole polymer and blocks of polybenzoxazinone polymer or polyoxadiazole polymer**
Blockcopolymere enthaltend Polybenzoxazolpolymerblöcke und Polybenzoxazinonpolymer- oder Polyoxadiazolpolymerblöcke
Copolymères blocs contenant des blocs de polymère polybenzoxazole et des blocs de polymère polybenzoxazinone ou de polymère polyoxadiazole

(30) Priority: 22.10.1992 US 965112
(43) Date of publication of application: 27.04.1994
(73) Proprietor: TOYOBO CO., LTD., Kita-ku, Osaka 530 (JP)
(72) Inventor: Harris, William J., Midland, Michigan 48640 (US)
(74) Representative: Patentanwälte Sternagel & Fleischer

(56) References cited:
- WO-A-92/00353
- WO-A-92/10536
- US-A- 5 098 985

## Description

### Statement of Government Rights

This invention was made with government support under U.S. Department of Defense Contract No. F33615-86-5068, awarded by the Department of Defense. The Government has certain rights in this invention.

The present invention relates to block copolymers that contain blocks of polybenzazole (PBZ) polymer.

It is known to make block copolymers that contain blocks of polybenzazole polymer and blocks of other polymer such as polyamides, polyimides, polyquinoxalines, polyquinolines, poly(aromatic ketones), poly(aromatic sulfones), or poly(aromatic ethers). The block copolymer can be formed into shaped articles, such as films, fibers and powders, from solution in the same way that polybenzazole polymer solutions are. The articles may be non-phase-separated. Such articles can be thermoformed like a thermoplastic polymer. However, the polybenzazole polymer increases the tensile strength and modulus of the shaped article above of what would be expected from the thermoplastic polymer alone. See Harris et al., Copolymers Containing Polybenzoxazole, Polybenzothiazole and Polybenzimidazole Moieties, U.S. Patent 5,098,985 (March 24, 1992). It is also known to make granular compositions of the block copolymers, and to compression mold those granular compositions to form molded articles that are not substantially phase-separated. See Hwang et al., PCT Publication WO 92/00353 (9 January, 1992).

It would be desirable to make thermoplastic copolymers that contain blocks of polybenzazole polymer and blocks of other polymers. It would be particularly desirable to find other blocks which have high thermal stability.

One aspect of the present invention is a block copolymer containing:
(1) at least one block of polybenzazole polymer that contains on average more than one repeating unit; and
(2) at least one block of thermoplastic polymer,
wherein the thermoplastic polymer is any of: polybenzoxazinone polymer or polyoxadiazole polymer and the block copolymer does not contain polyimide.

A second aspect of the present invention is a dope that contains a solvent and a block copolymer of the present invention.

A third aspect of the present invention is a shaped article that contains the block copolymer of the present invention.

A fourth aspect of the present invention is a granular composition that contains the block copolymer of the present invention in a substantially non-phased separated state.

A fifth aspect of the present invention is a method of using a granular composition of the present invention comprising the step of compression molding the granular composition in a mold to form a molded article containing substantially non-phase separated block copolymer.

The dopes and polymers described in the first and second aspects of the invention may be used to make granular compositions or articles described in the third and fourth aspects of the present invention. The granular compositions may be compression-molded to form molded articles using the process described in the fifth aspect of the present invention. Shaped articles that contain block copolymers of the present invention are easily thermoformable, like thermoplastic polymers, but they have tensile properties which reflect the support given by the polybenzazole polymer.

### Polybenzazole Polymers Useful in the Present Invention

Block copolymers of the present invention contain a polybenzazole (PBZ) block which contains polybenzoxazole (PBO), polybenzothiazole (PBT) or polybenzimidazole (PBI) polymer or copolymer. PBO, PBT, PBI and random, sequential and block copolymers of PBO, PBT and PBI are described in references such as Wolfe et al., Liquid Crystalline Polymer Compositions, Process and Products, U.S. Patent 4,703,103 (October 27, 1987); Wolfe et al., Liquid Crystalline Polymer Compositions, Process and Products, U.S. Patent 4,533,692 (August 6, 1985); Wolfe et al., Liquid Crystalline Poly(2,6-Benzothiazole) Compositions, Process and Products, U.S. Patent 4,533,724 (August 6, 1985); Wolfe, Liquid Crystalline Polymer Compositions, Process and Products, U.S. Patent 4,533,693 (August 6, 1985); Evers, Thermoxadatively Stable Articulated p-Benzobisoxazole and p-Benzobisthiazole Polymers, U.S. Patent 4,359,567 (November 16, 1982); Tsai et al., Method for Making Heterocyclic Block Copolymer, U.S. Patent 4,578,432 (March 25, 1986); 11 Ency. Poly. Sci. & Eng., Polybenzothiazoles and Polybenzoxazoles, 601 (J. Wiley & Sons 1988) and W. W. Adams et al., The Materials Science and Engineering of Rigid-Rod Polymers (Materials Research Society 1989).

The polybenzazole block preferably contains AB-mer units, as represented in Formula 1(a), and/or AA/BB-mer units, as represented in Formula 1(b) 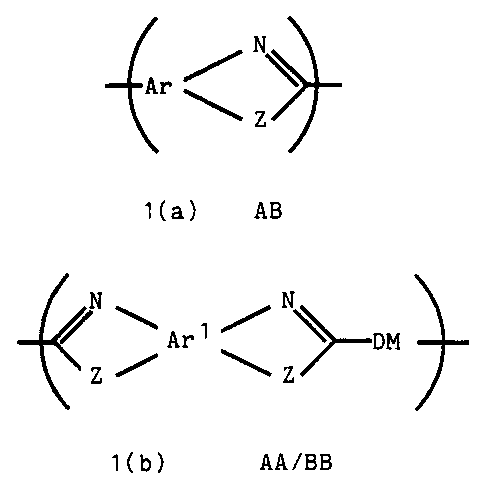 wherein:
Each Ar represents an aromatic group. The aromatic group may be heterocyclic, such as a pyridinylene group, but it is preferably carbocyclic. The aromatic group may be a fused or unfused polycyclic system, but is preferably a single six-membered ring. Size is not critical, but the aromatic group preferably contains no more than about 18 carbon atoms, more preferably no more than about 12 carbon atoms and most preferably no more than about 6 carbon atoms. Examples of suitable aromatic groups include phenylene moieties, tolylene moieties, biphenylene moieties and bis-phenylene ether moieties. Ar¹ in AA/BB-mer units is preferably a 1,2,4,5-phenylene moiety or an analog thereof. Ar in AB-mer units is preferably a 1,3,4-phenylene moiety or an analog thereof.
Each Z is independently an oxygen atom, a sulfur atom or -NR- wherein R is hydrogen, an alkyl group or an aromatic group. Each Z is preferably oxygen or sulfur and more preferably oxygen.
Each DM is independently a bond or a divalent organic moiety that does not interfere with the synthesis, fabrication or use of the polymer. The divalent organic moiety may contain an aliphatic group, which preferably has no more than about 12 carbon atoms, but the divalent organic moiety is preferably an aromatic group (Ar) as previously described. It is most preferably a 1,4-phenylene moiety or an analog thereof.

The nitrogen atom and the Z moiety in each azole ring are bonded to adjacent carbon atoms in the aromatic group, such that a five-membered azole ring fused with the aromatic group is formed.

The azole rings in AA/BB-mer units may be in cis- or trans-position with respect to each other, as illustrated in 11 Ency. Poly. Sci. & Eng., supra, at 602.

The polybenzazole block preferably consists essentially of either AB-PBZ mer units or AA/BB-PBZ mer units, and more preferably consists essentially of AA/BB-PBZ mer units. The polybenzazole polymer is preferably a lyotropic liquid-crystalline polymer (i.e., it forms liquid crystalline domains when it is dissolved in a solvent at a concentration greater than a critical concentration point).

Preferred mer units are illustrated in Formulae 2 (a)-(h). The polymer more preferably consists essentially of mer units selected from those illustrated in 2(a)-(h), and most preferably consists essentially of a number of identical units selected from those illustrated in 2(a)-(d).

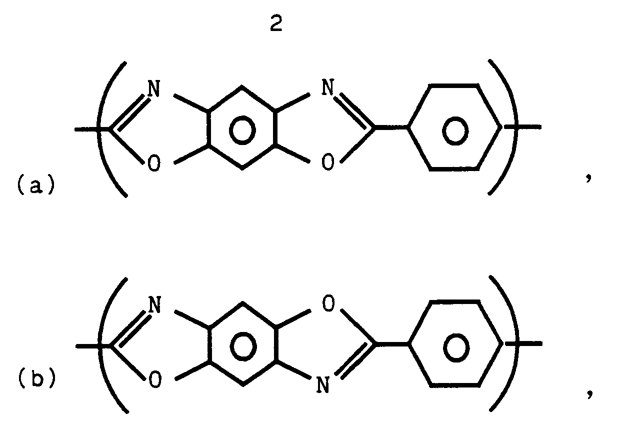

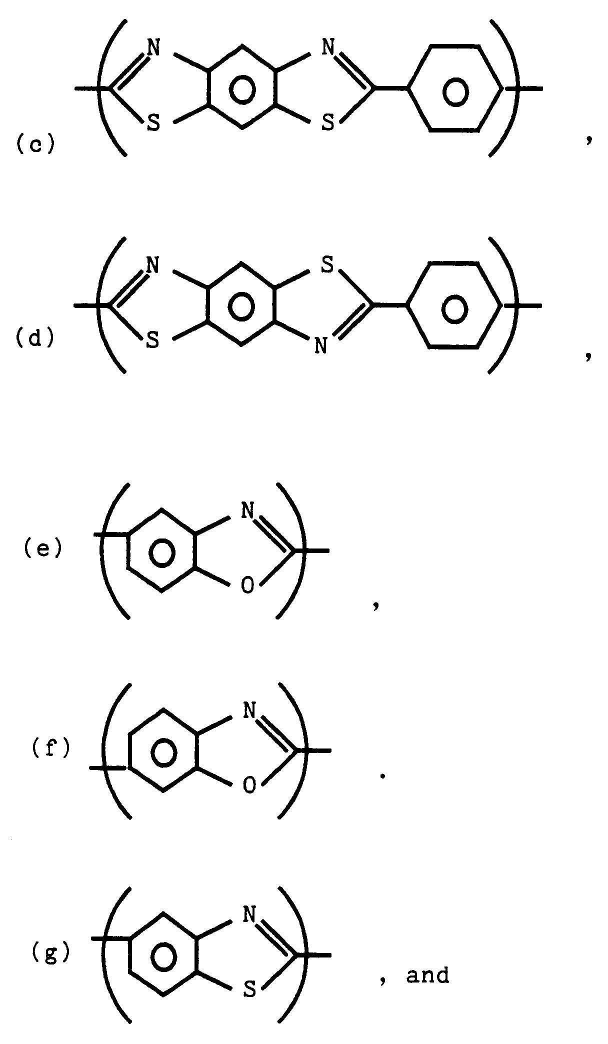

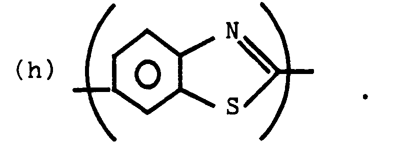

The polybenzazole block can be synthesized by known methods, such as those described in Wolfe et al., U.S. Patent 4,533,693 (August 6, 1985); Sybert et al., U.S. Patent 4,772,678 (September 20, 1988); Harris, U.S. Patent 4,847,350 (July 11, 1989); Gregory, U.S. Patent 5,089,591 (February 18, 1992); Harris et al., U.S. Patent 5,098,985 (March 24, 1992); and Ledbetter et al., "An Integrated Laboratory Process for Preparing Rigid Rod Fibers from the Monomers," The Materials Science and Engineering of Rigid-Rod Polymers at 253-64 (Materials Res. Soc. 1989). In summary, suitable monomers (AA-monomers and BB-monomers or AB-monomers) are reacted in a solution of nonoxidizing and dehydrating acid, such as polyphosphoric acid, under nonoxidizing atmosphere, preferably with vigorous mixing and high shear at a temperature that is increased in step-wise or ramped fashion from no more than 100°C to at least 150°C. Examples of suitable AA-monomers include terephthalic acid and analogs thereof. Examples of suitable BB-monomers include 4,6-diaminoresorcinol, 2,5-diaminohydroquinone, 2,5-diamino-1,4-dithiobenzene, 1,2,4,5-tetraaminobenzene and analogs thereof, typically stored as acid salts. Examples of suitable AB-monomers include 3-amino-4-hydroxybenzoic acid, 3-hydroxy-4-aminobenzoic acid, 3-amino-4-thiobenzoic acid, 3-thio-4-aminobenzoic acid and analogs thereof, typically stored as acid salts.

Each polybenzazole block preferably contains on average at least about 5 repeating units, and more preferably at least about 8 repeating units. It preferably contains on average no more than about 100 repeating units, and more preferably no more than about 50 repeating units.

In block copolymers of the present invention, the polybenzazole polymer block is chemically linked to a block of polybenzoxazinone polymer or polyoxadiazole polymer.

### Polybenzoxazinone Polymers

The polybenzoxazinone block contains a plurality of repeating units that have a polybenzoxazinone moiety, as illustrated in Figure 3. 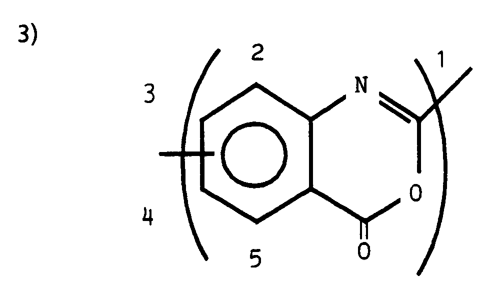 The repeating units in the polybenzoxazinone block may be represented by Formula (3), but they are preferably represented by Formula (4) 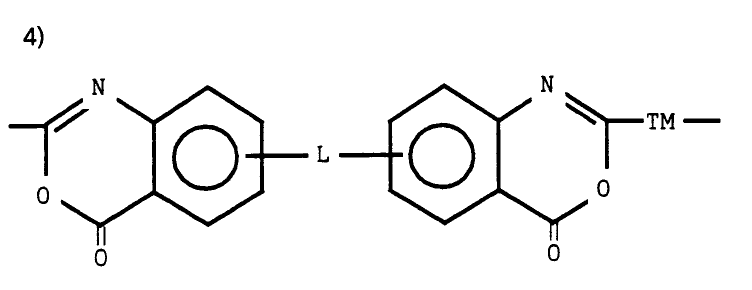 wherein L and TM are each independently a bond or a divalent linking moiety. They are preferably selected such that the polybenzoxazinone block is thermoplastic. L and TM are more preferably selected to provide a polybenzoxazinone polymer with a high thermal stability.

L is preferably a bond, an oxygen atom, a sulfur atom, an alkylene or perfluoryl alkylene moiety, or an azo group. L is more preferably an azo group, a bond or an oxygen atom. L is most preferably a bond. L is preferably bonded to the 3 or 4 carbon of the benzoxazinone moieties, as those carbons are numbered in Formula 3. The linking group L is more preferably bonded to the 3 carbon in each benzoxazinone moiety.

TM is preferably either an alkyl group or an aromatic group. It is more preferably an aromatic group. Examples of aromatic groups used in TM include m-phenylene moieties, p-phenylene moieties, 4,4' -biphenylene moieties and diphenylether moieties. Other moieties are described in articles 11 Ency. of Polymer Science and Eng., Polybenzoxazinones at 635-641 (J. Wiley & Sons 1989). Aliphatic moieties in TM preferably contain no more than 12 carbon atoms, and more preferably no more than 8 carbon atoms. Aromatic groups have the preferred embodiments previously described for aromatic groups.

Polybenzoxazinone polymers can be synthesized by several different processes, but for this invention they are most conveniently synthesized in non-oxidizing dehydrating solvent acids, such as polyphosphoric acid or a mixture of methanesulfonic acid and P₂O₅. The polymer is formed by the reaction of two monomers. The first monomer is a dicarboxylic acid containing 2 carboxylic acid groups linked by the moiety described in TM. The second monomer is a bis(o-aminobenzoic acid) compound. It contains two o-aminobenzoic acid moieties linked by a linking group (L) which is the same as the group L in the polymer. The monomers react at a temperature of at least 50°C more preferably at least 100°C and most preferably at least about 150°C. The temperature is preferably no more than 250°C and more preferably no more than 200°C. The atmosphere is preferably an inert gas such as nitrogen or argon. The reaction is preferably carried out with agitation.

The diacid monomer used to make the polybenzoxazinone polymer is also an AA-monomer used to make polybenzazole polymers. Therefore, the diacid monomer can link the polybenzoxazinone block and the polybenzazole block. For instance, the polybenzazole block and the polybenzoxazinone block may be synthesized separately and then linked in a separate reaction. However, it is more preferable to synthesize functionally-terminated polybenzazole block and add it to the reaction mixture before or during polymerization of the polybenzoxazinone or to synthesize functionally-terminated polybenzoxazinone block and add it to the reaction mixture before or during polymerization of the polybenzoxazole.

### Polyoxadiazole Polymers

Polyoxadiazole blocks contain either a 1,3,4-oxadiazole group (illustrated in Formula 5(a))or a 1,2,4-oxadiazole group (illustrated in Formula 5(b)). 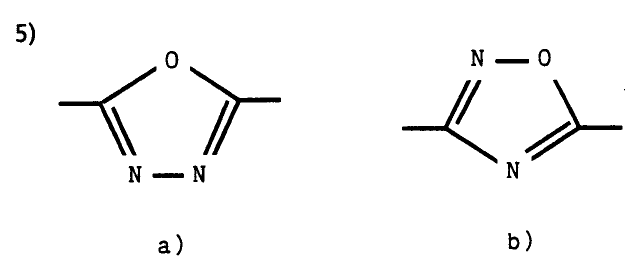 The polyoxadiazole block preferably contains the unit in Formula 5(a). The polymer preferably contains a plurality of repeating mer units represented by one or more of Formulae 6(a)-(c): 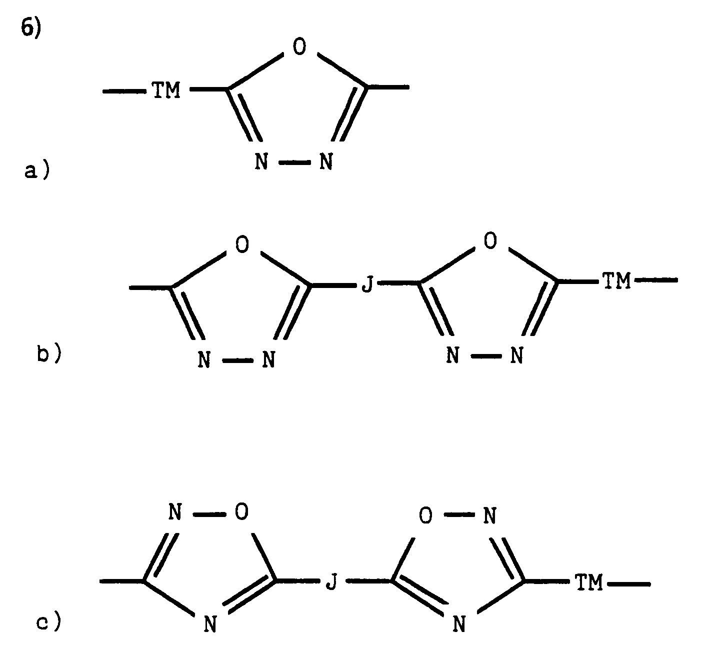 wherein each J and TM are divalent organic moieties linking the oxadiazole rings. J and TM are preferably individually selected such that the polyoxadiazole polymer is thermoplastic.

J may be, for instance, an alkyl group or a perfluoryl alkyl group, or an aromatic group. It is preferably an aromatic group having the preferred embodiments previously described for aromatic groups. TM has the same description and preferred embodiments as for polybenzoxazinones. Examples of suitable moieties are described in 12 Ency. of Polymer Science and Eng., Polyhydrazides and Polyoxadiazoles, at 322, 332-337 (J. Wiley & Sons 1989), particularly at page 334, Table 4.

The polyoxadiazole polymer can be synthesized by several different processes, but it is preferably synthesized in a dehydrating non-oxidizing solvent acid by the reaction of two monomers. The first monomer is a diacid monomer that contains two carboxylic acid, acid halide or ester groups linked by TM. The second monomer is either: (a) hydrazine to make polymers represented by Formula 6(a); or (b) a dihydrazide monomer, containing two hydrazide groups linked by J, to make polymers represented by Formula 6(b). Suitable dihydrazide monomers are represented by Formula 7. 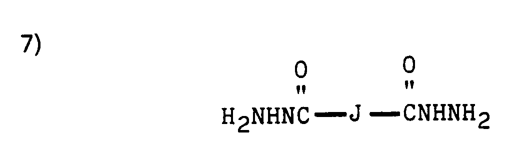 The temperatures are preferably at least 25°C more preferably at least 50°C and most preferably at least 80°C. It is preferably no more than 220°C and more no more than 200°C. The atmosphere is preferably an inert gas such as nitrogen or argon. Dihydrazide monomers can be synthesized by known processes such as those described in 2 J. Polym. Sci.-Pt.A, at page 1137 (1965).

As with benzoxazinone polymers, the diacid monomer used in polyoxadiazole polymers is also useful for linking polybenzazole polymers. Therefore, the diacid monomer can link the two polymers together. As with the polybenzoxazinone, the two polymers may be synthesized separately and then linked together. But preferably, one polymer can be synthesized that is functionally-terminated, such as with a carboxylic acid group, and then the functionally-terminated polymer blocks can be added to a reaction mixture in which the other polymer is formed.

### Block Copolymers

The block copolymers of the present invention contain at least one polybenzazole block and at least one polybenzoxazinone block or polyoxadiazole block, as those blocks are previously described. The block copolymer may contain from 1 to 99 weight percent of each of those blocks. The block copolymer preferably contains at least five weight percent polybenzazole polymer and at least five weight percent polybenzoxazinone or polyoxadiazole polymer. The polybenzoxazinone or polyoxadiazole polymer preferably makes up at least 10 percent of the block copolymer, more preferably at least 25 percent and most preferably at least 30 percent.

The block copolymer may further contain blocks of other thermoplastic polymer or copolymer, such as polyamide, or poly(aromatic ether ketone or sulfone), but it preferably does not contain those other thermoplastic polymers. The polymer blocks in the block copolymer are preferably stable up to at least the glass-transition temperature of the block copolymer. The blocks are more preferably stable up to at least 250°C, more highly preferably to at least 300°C and most preferably to at least 350°C. Some block copolymers may be stable for short periods at 400°C or 450°C or higher.

The block copolymers are usually made by solution polymerization in a suitable dehydrating solvent acid, such as polyphosphoric acid or methanesulfonic acid with a dehydrating agent. The result is a solution or dope containing the block copolymer and the acid. The dope may optionally further contain free polybenzazole, polybenzoxazinone or polyoxadiazole polymer, but that polymer is preferably minimized. The polymer may be coagulated by contacting the dope solution with a suitable non-solvent such as a water.

The dope is preferably optically isotropic (not exhibiting substantial liquid crystalline domains) at the time that it is coagulated. Block copolymers coagulated from optically isotropic dopes are typically not substantially phase separated in the resulting coagulated article, whereas block copolymers precipitated from anisotropic (liquid crystalline) dopes are typically phase separated in the resulting shaped article. Phase separation in precipitated block copolymers cannot be reversed except by redissolving the polymer and precipitating from an optically isotropic solution. Of course, a phase-separated product can be produced if desired, by precipitating the block copolymer from an anisotropic solution.

Optical isotropy and anisotropy of the dope can be determined by a number of tests familiar to persons of ordinary skill in the art, such as those described in Hwang et al., "Composites on a Molecular Level: Phase Relationships, Processing, and Properties," B22(2) J. Macromol. Sci.-Phys. 231, 234-35 (1983). A simple method is to see if the solution exhibits birefringence when viewed under a microscope under cross-polar conditions. Within even optically isotropic solutions, some association of rigid rod blocks is inevitable on a molecular scale. However, in polymers precipitated from the optically isotropic phase, the level of anisotropy and phase-separation is preferably small enough to provide a block copolymer or polymer composition which is essentially a molecular composite.

The point at which a given dope changes from optically isotropic to anisotropic phase and the reverse varies as a function of many factors, such as the concentration of the polymer, the solvent, the size and concentration of rigid rod PBZ blocks within the polymers in the dope, the temperature of the dope and other factors. The parameter most easily controlled is concentration of the block polymer and any homopolymer. It is convenient to synthesize the block copolymer in a solution having a low enough concentration to avoid the anisotropic phase. If an anisotropic dope is formed, it may be diluted with solvent acid until an optically isotropic state is reached.

The preferred concentration of polymer in optically isotropic dopes of the present invention varies depending upon the portion of the polymer which is rigid rod PBZ. If the polymer in the dope contains only 5 weight percent rigid rod PBZ block or less, then the concentration of polymer in the dope may be as high as the solvent acid can dissolve, such as 50 weight percent or less. If the polymer contains 30 weight percent rigid rod PBZ block, then the dope preferably comprises no more than 15 weight percent polymer. If the polymer contains 50 weight percent rigid rod PBZ block, then the dope preferably comprises no more than 10 weight percent polymer. If the polymer comprises 70 weight percent rigid rod PBZ block, then the dope preferably comprises no more than 6 weight percent polymer and more preferably no more than 4 weight percent polymer.

The dope may be spun as a fiber or extruded as a film to form polymer fibers and film according to known processes as described in Harris et al., U.S. Patent 5,098,985 (March 24, 1992). The dope may also be formed into granular compositions by known processes. For instance, the dope may be sprayed as a group of droplets into a coagulant such as water and the resulting powder may be filtered from the coagulant. Alternatively, the dope may be frozen and ground to a desired size. Then the frozen dope particles may be immersed in a coagulant liquid at a temperature suitable to melt the dope and coagulate the polymer. The average size of particles in such granular compositions is between 1 µm and 500 µm, and preferably between 1 µm and 200 µm. The granular compositions may be compressed to form a briquette or other monolithic structure for ease of handling.

The granular compositions that contain thermoplastic block copolymers can be compression-molded by ordinary techniques. The optimum temperature and pressure for compression molding will vary depending upon the block copolymer. The temperature for compression molding is preferably at least the glass transition temperature of the polymer and below the temperature at which the polymer substantially decomposes. It may be as low as 100°C for block copolymers which contain substantially aliphatic moieties in the polymer backbone to as high as 450°C or more for block copolymers which contain wholly aromatic polymers. It is preferably no more than 500°C.

Shaped articles, molded articles and granular compositions that contain block copolymers of the present invention are preferably not substantially phase-separated. Phase separation refers to the existence within an article of optically distinct anisotropic domains of polymers. In shaped articles of the present invention, some phase-separation on a molecular level is inevitable, and the articles can show semicrystalline character. However, the size of domains of phase-separated polymer in the polymer compositions of the present invention is preferably on average not greater than 100 nm, highly preferably not greater than 50 nm, more preferably not greater than 20 nm, more highly preferably not greater than 10 nm and most preferably not greater than 5 nm. Phase separation may be judged by known characteristics, such as opacity, electron-microscopy, small-angle X-ray scattering or small-angle light scattering. Methods for measuring phase-separation in a system are discussed in Hwang et al., "Composites on a Molecular Level: Phase Relationships, Processing, and Properties," B22(2) J. Macromol. Sci.-Phys. 231, 234-35 (1983), which is incorporated by reference.

Fibers that contain block copolymers of the present invention may be made into ropes or cables or used in fiber-based matrix composites. Films may be a part of honeycombs or laminates. The molded articles, composites and laminates and honeycombs may be used for structural applications.

The following examples are for illustrative purposes only. They should not be taken as limiting the scope of either the specification or the claims. Unless stated otherwise, all parts and percentages are by weight.

### Example 1 - Block copolymer containing 70 percent cis-PBO and 30 percent aromatic polybenzoxazinone.

A functionally-terminated cis-PBO oligomer is made by the following procedure. A mixture that contains 100 g of 4,6-diaminoresorcinol dihydrochloride, 84.8 g of terephthaloyl chloride, and 406.3 g of polyphosphoric acid containing 76.7 weight percent P₂O₅ is reacted with agitation under nitrogen atmosphere for 16 hours at 45°C. The mixture is warmed to 95°C and 224 g of phosphorous pentoxide is added. The mixture is reacted for 8 hours at 95°C, for 16 hours at 150°C, and for 24 hours at 190°C. The resulting oligomer dope is cooled, cut and stored under nitrogen.

A 10:1 mixture of methanesulfonic acid and phosphorous pentoxide (hereinafter a 10-1 methanesulfonic acid solution) is made. The mixture is added with stirring to 1.47 g of oxy-bis-(4-benzoyl chloride). The reaction mixture is held at 85°C for 1 hour and then warmed to 95°C. A 25 g quantity of the cis-PBO oligomer dope is added and the reaction is continued for 16 hours. A 1.13 g quantity of 3,3'-dicarboxybenzidine dihydrochloride is added to the reaction mixture and rinsed down with 40 g of 10-1 methanesulfonic acid solution. The reaction is continued for 48 hours, and the temperature is raised to 140°C for 1 hour. The resulting block copolymer is coagulated in water, washed, dried, ground, re-washed with water and then dried to constant weight in a 90°C vacuum oven. The block copolymer has an inherent viscosity of 5.29 dL/g as measured in methanesulfonic acid at 25°C and a concentration of 0.0484 g/dL.

### Example 2 - Block copolymer containing 5 percent cis-PBO and 95 percent aliphatic polybenzoxazinone.

A functionally-terminated cis-PBO oligomer is made by the following procedure. A mixture that contains 100 g of 4,6-diaminoresorcinol dihydrochloride, 90.52 g of terephthaloyl chloride, and 417.4 g of polyphosphoric acid containing 76.9 weight percent P₂O₅ is reacted with agitation under nitrogen atmosphere for 16 hours at 45°C. The mixture is warmed to 95°C and 224 g of phosphorous pentoxide is added. The mixture is reacted for 8 hours at 95°C, for 16 hours at 150°C, and for 24 hours at 190°C. The resulting oligomer dope is cooled, cut and stored under nitrogen.

At 2.2 g quantity of the cis-PBO oligomer dope is mixed with 80 g of 10-1 methanesulfonic acid solution under nitrogen atmosphere at 95°C for 6 hours. A 5 g quantity of 3,3'-dicarboxybenzidine dihydrochloride and a 2.94 g quantity of sebasic acid are added and the reaction is continued at 95°C for an additional 48 hours. The resulting block copolymer is coagulated in an aqueous phosphate buffer. The coagulated polymer is washed in water, dried, ground, re-washed with water, and dried to constant weight in a 90°C vacuum oven. The block copolymer has an inherent viscosity of 5.84 dL/g in methanesulfonic acid at 25°C and a concentration of 0.0528 g/dL.

### Example 3 - Synthesis of block copolymer containing 5 percent cis-PBO and 95 percent aliphatic polyoxadiazole polymer.

A dope containing: (1) 0.45 g of cis-PBO oligomer with, on average, 8, repeating units per block, (2) 2.77 g of polyphosphoric acid; and (3) 6.17 g of hydrazine sulfate under nitrogen atmosphere is mixed with 90 g of 10-1 methanesulfonic acid solution. The mixture is agitated at 80°C for 3 hours. A 9.64 g quantity of sebasic acid is added with 42.7 g of 10-1 methanesulfonic acid solution. The reaction is continued at 80°C for 40 hours. The polymer has an inherent viscosity of about 0.92 dL/g as measured in methanesulfonic acid at a temperature of about 25°C. A film is cast from the dope and coagulated in water. The film is washed with water and dried. It is clear to translucent and has good strength. It exhibits a sharp endotherm resembling a melting a point at about 130 to 135°C when scanned under DSC. Infrared spectroscopy of the film is consistent with the chemical formula (8) set out hereinafter. 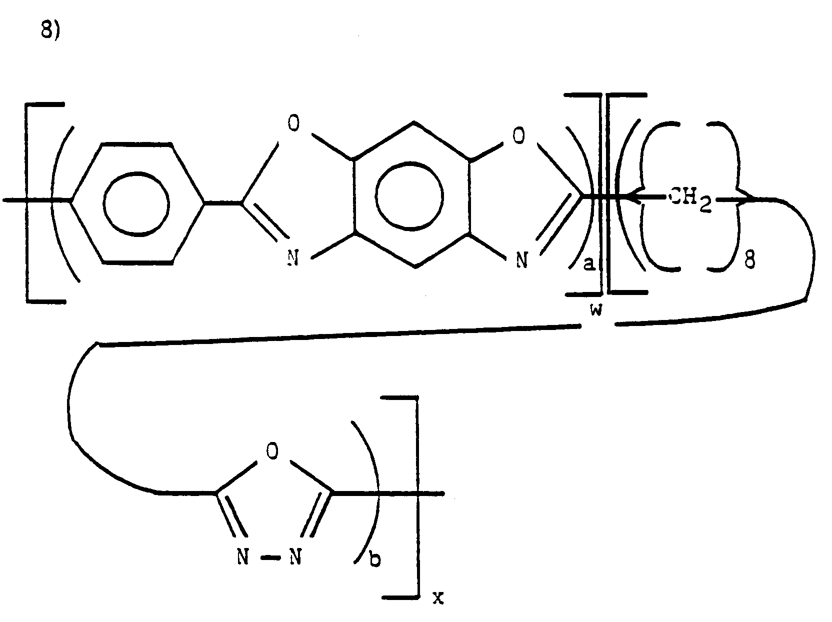 wherein a and b represent a number of repeating units per block and w and x represent a number of blocks per polymer, a averages 8 repeating units per block, and w makes up 5 weight percent of the block copolymer. "b" was calculated to average 100 to 200 repeating units per block. The values were calculated from the chain length of the PBO blocks and from the weight ratios of PBO and polyoxadiazole in the block copolymer, presuming that most polyoxadiazole is part of a block copolymer.

### Example 4 - Block copolymer containing 15 percent cis-PBO and 85 percent aliphatic polyoxadiazole.

A mixture of 3.68 g of hydrazine sulfate and 6.43 g of cis-PBO dope (containing about 5.53 g polyphosphoric acid and 0.90 g of functionally-terminated cis-PBO with on average about 8 repeating units) is mixed with 56.1 g of 10-1 methanesulfonic acid solution for 2 hours at about 80°C under nitrogen atmosphere. A 5.81 g quantity of sebasic acid is added with 29.1 g of 10-1 methanesulfonic acid solution. The reaction is continued for 44 hours at 80°C. The resulting block copolymer is represented by Formula 8 wherein a and b are selected such that the polymer contains 15 weight percent cis-PBO repeating units. The solution is cast as a film and coagulated in a phosphate buffer solution to form a clear amber film. The polymer has an inherent viscosity of 0.96 dL/g as measure in methanesulfonic acid at 25°C and a concentration of 0.0504 g/dL.

### Example 5 - Block copolymer containing 50 percent cis-PBO and 50 percent aliphatic polyoxadiazole.

A 17.86 g solution containing 14 weight percent of functionally-terminated PBO having on average 8 repeating units and 145.5 g of polyphosphoric acid are mixed under nitrogen at 95°C for 16 hours. A 1.80 g quantity of hydrazine sulfate and a 3.05 g quantity of sebasic acid are added and the reaction is continued for 48 hours at 80°C. The block copolymer has an inherent viscosity of 7.27 dL/g as measure in methanesulfonic acid at 25°C and a concentration of 0.047 g/dL. A film is cast from the polymer solution as previously described. The film exhibits a broad endotherm at 100°C. The block copolymer has a formula as represented by Formula 8 wherein the block copolymer contains about equal masses of each repeating unit.

### Example 6 - Block copolymer containing 70 percent cis-PBO and 30 percent aliphatic polyoxadiazole.

A mixture that contains 1.08 g of hydrazine sulfate and 25.0 g of dope which contains 21.50 g of polyphosphoric acid and 3.50 g of functionally-terminated cis-PBO (8 repeating units on average) is mixed with 100 g of 10-1 methanesulfonic acid solution. The mixture is stirred for 40 hours at 80°C. A 1.84 g quantity of sebasic acid is added with 39.2 g of 10-1 methanesulfonic acid solution. The reaction is continued for 48 hours at 80°C. A strong, clear amber film is cast from the dope as described in Example 4. The block copolymer corresponds to Formula 8 wherein 70 percent of the block copolymer is cis-PBO. The block copolymer has an inherent viscosity of 5.18 dL/g in methanesulfonic acid at 25°C and a concentration of 0.0468 g/dL. DSC scans of the film reveal an endotherm at 130°C.

### Example 7 - Block copolymer containing 5 percent cis-PBO and 95 percent aromatic polyoxadiazole polymer.

A mixture of 14.33 g of oxy-bis-(4-benzoyl chloride) and 95.6 g 10-1 methanesulfonic acid solution is mixed for 1 hour at 80°C under nitrogen atmosphere. A 4.29 g quantity of cis-PBO dope containing 3.69 g of polyphosphoric acid and 0.60 g of functionally-terminated cis-PBO with on average 8 repeating units is added to the mixture. The reaction is continued for 16 hours at 80°C. A 6.90 g quantity of hydrazine sulfate is added with 32.6 g of 10-1 methanesulfonic acid solution. The reaction is continued for 48 hours. The resulting block copolymer has a formula corresponding to Formula 9 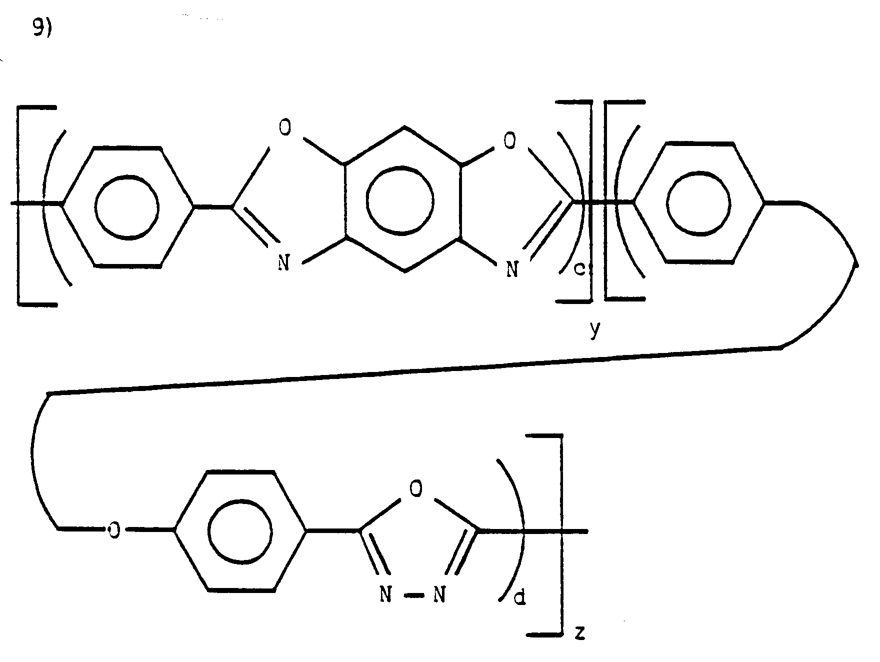 wherein c and d represent a number of units per block, y and z represent a number of blocks per polymer and c and y are selected such that the block copolymer contains 5 percent cis-PBO polymer in blocks with 8 repeating units on average. "d" was calculated to average about 75 to 150 repeating units per block. The values were calculated from the chain length of the PBO blocks and from the weight ratios of PBO and polyoxadiazole in the block copolymer, presuming that most polyoxadiazole is part of a block copolymer. The block copolymer has an inherent viscosity of about 3.38 dL/g as measure in methanesulfonic acid at 25°C and a concentration of 0.048 g/dL. A film is cast as described in Example 4. DSC shows a possible glass transition temperature at 260°C.

### Example 8 - Block copolymer containing 10 percent cis-PBO and 90 percent aromatic polyoxadiazole polymer.

A mixture containing 10.69 g of oxy-bis-(4-benzoyl chloride) and 100.8 g of 10-1 methanesulfonic acid is stirred for 1 hour at 90°C. A 10.7 g quantity of cis-PBO dope that contains 9.20 g of polyphosphoric acid and 1.50 g of functionally-terminated cis-PBO oligomer (8 repeating units on average) is added and the reaction is continued for 16 hours at 90°C. A 6.89 g quantity of isophthalic dihydrazide is added with 61.2 g of 10-1 methanesulfonic acid solution. The reaction is continued for 24 hours at 80°C. The resulting polymer has an inherent viscosity of 7.19 dL/g as measure in methanesulfonic acid at 25°C and a concentration of 0.504 g/dL. The block copolymer is represented by Formula 10 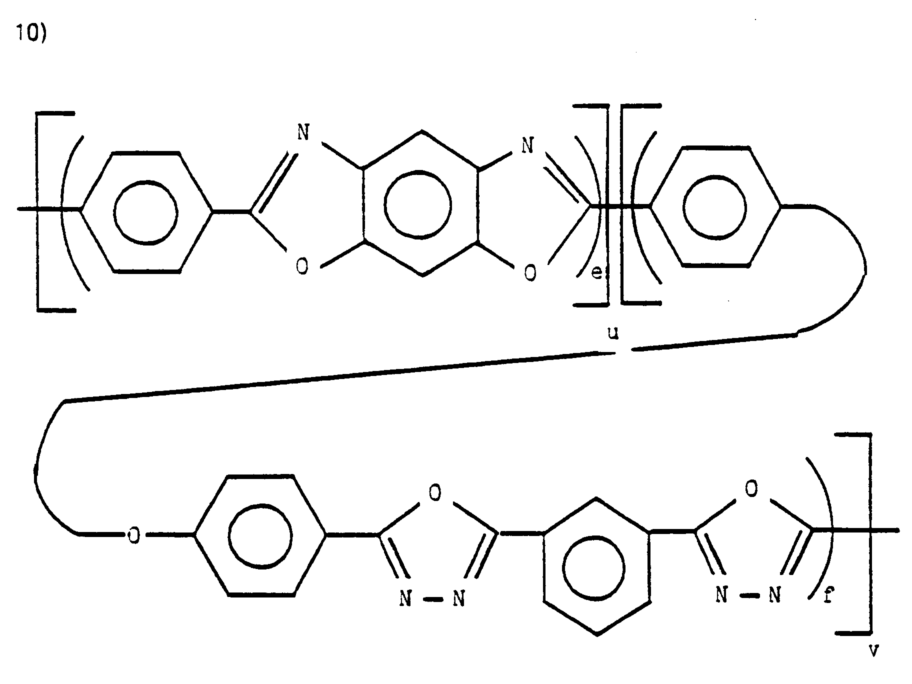 wherein e and f represent a number of repeating units per block and u and v represent a number of blocks per molecule. e and u are selected such that the block copolymer contains 10 weight percent cis-PBO, "e" is about 8. "f" was calculated to average 25 to 50 repeating units per block. The values were calculated from the chain length of the PBO blocks and from the weight ratios of PBO and polyoxadiazole in the block copolymer, presuming that most polyoxadiazole is part of a block copolymer. A film cast as described in Example 4 is clear and amber-colored and exhibits a possible glass transition temperature at 250°C.

### Example 9 - Block copolymer containing 70 percent cis-PBO and 30 percent aromatic polyoxadiazole polymer.

The process of Example 7 is repeated using 2.10 g of oxy-bis-(4-benzoyl chloride), 0.91 g of hydrazine sulfate, 25.0 g of cis-PBO dope that contains about 3.50 g of cis-PBO oligomer and 21.50 g of polyphosphoric acid, 132.8 g of 10-1 methanesulfonic acid solution initially and 39.9 g of 10-1 methanesulfonic acid solution added with hydrazine sulfate. The solution is agitated for 24 hours after the cis-PBO dope addition and before hydrazine sulfate addition. The resulting polymer has an inherent viscosity of 13.8 dL/g as measure in methanesulfonic acid at 25°C and a concentration of 0.0484 g/dL.

## Claims

1. A block copolymer containing:
(1) at least one block of polybenzazole polymer, that contains on average more than one repeating unit; and
(2) at least one block of thermoplastic polymer wherein the thermoplastic polymer is any of polybenzoxazinone polymer or polyoxadiazole polymer and the block copolymer does not contain polyimide.

2. The block copolymer of claim 1 wherein the polybenzazole block contains any of the following repeating units:

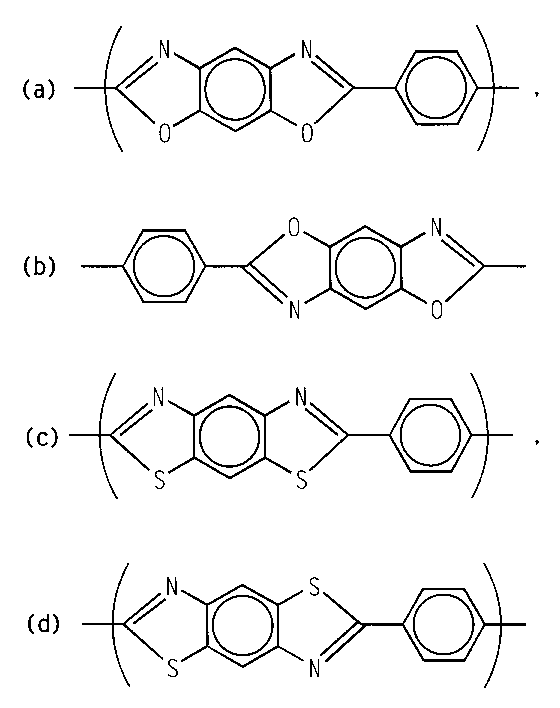

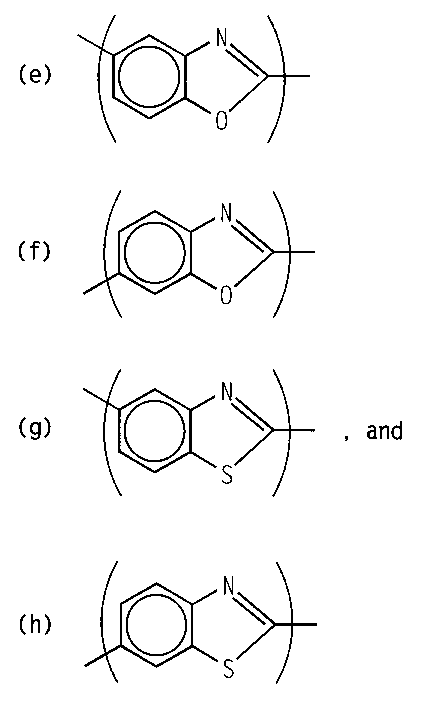

3. The block copolymer as described in any of the preceding claims wherein the thermoplastic block in the block copolymer is a polybenzoxazinone polymer that contains any of the following repeating units: 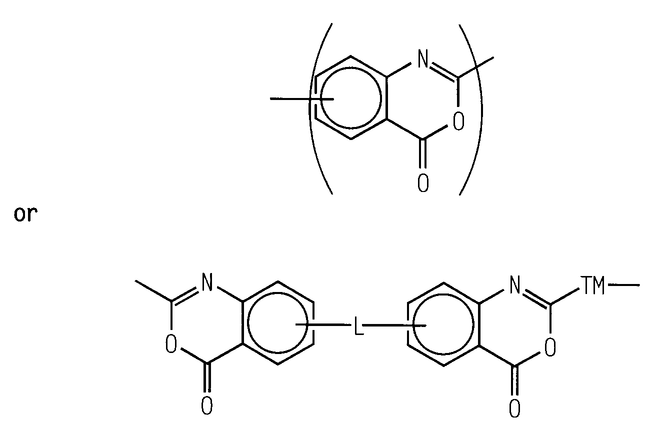 wherein L and TM are each divalent organic groups linking the benzoxazinone groups.

4. The block copolymer according to any of claims 1 or 2 wherein the thermoplastic block in the block copolymer is a polyoxadiazole polymer that contains any of the following repeating units: 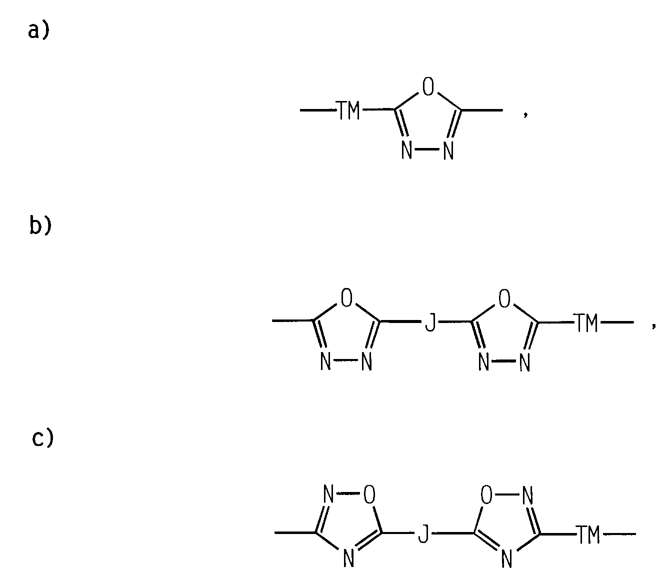 wherein J and TM are each divalent organic moieties linking the oxadiazole groups.

5. The block copolymer as described in any of the preceding claims wherein the block copolymer contains at least 5 weight percent polybenzazole blocks and at least 5 weight percent polybenzoxazinone or polyoxadiazole blocks.

6. The block copolymer as described in any of the preceding claims wherein the block copolymer further contains blocks of a second thermoplastic polymer.

7. A dope solution that contains a block copolymer according to any of claims 1-6 and a solvent wherein the dope solution is optically isotropic.

8. A shaped article containing a block copolymer according to any of claims 1-6 wherein the shaped article is any one of:
(a) a fiber,
(b) a film, or
(c) a molded article,
and wherein the average size of phase separated domains is no more than 100 nm.

9. A granular composition containing a block copolymer according to any of claims 1-6 wherein the average size of phase separated domains is no more than 100 nm and the average size of particles is between 1 µm and 500 µm.

10. A method for using a granular composition of claim 9 wherein the granular composition is compression molded in a mold to form a molded article wherein the average size of phase separated domains is no more than 100 nm.

## Patentansprüche

1. Blockcopolymer, enthaltend:
(1) wenigstens einen Block eines Polybenzazolpolymers, das im Mittel mehr als eine sich wiederholende Einheit enthält, und
(2) wenigstens einen Block eines thermoplastischen Polymers, wobei das thermoplastische Polymer eines von Polybenzoxazinonpolymer oder Polyoxadiazolpolymer ist und das Blockcopolymer kein Polyimid enthält.

2. Blockcopolymer nach Anspruch 1, wobei der Polybenzazolblock jegliche der folgenden sich wiederholenden Einheiten enthält:

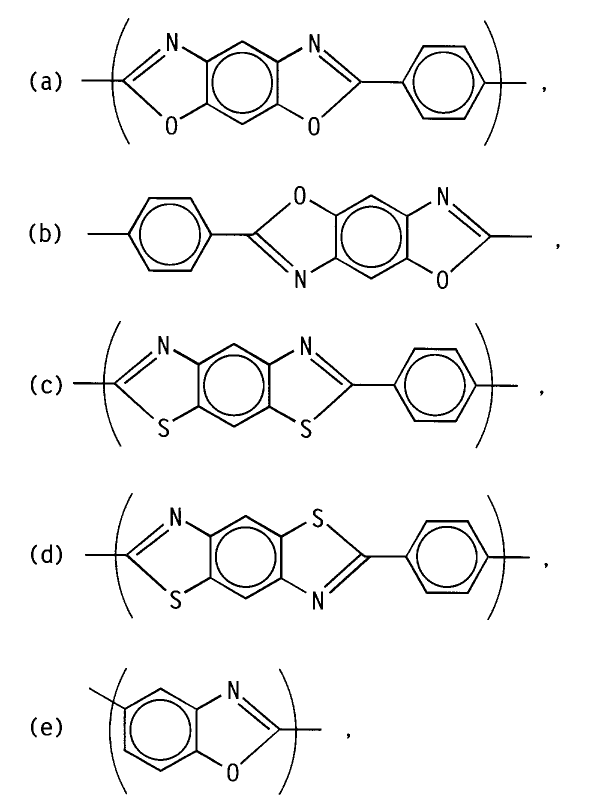

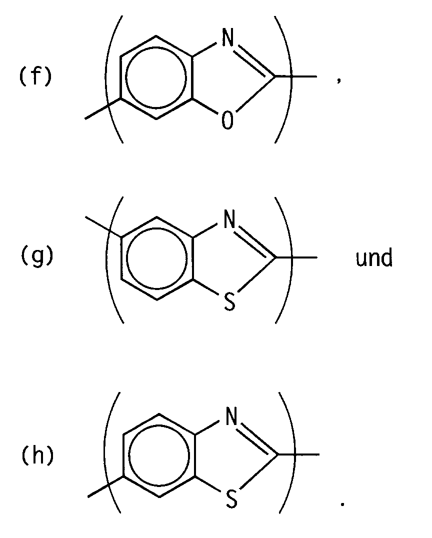

3. Blockcopolymer wie in einem der vorstehenden Ansprüche beschrieben, wobei der thermoplastische Block in dem Blockcopolymer ein Polybenzoxazinonpolymer ist, das jegliche der folgenden sich wiederholenden Einheiten enthält: 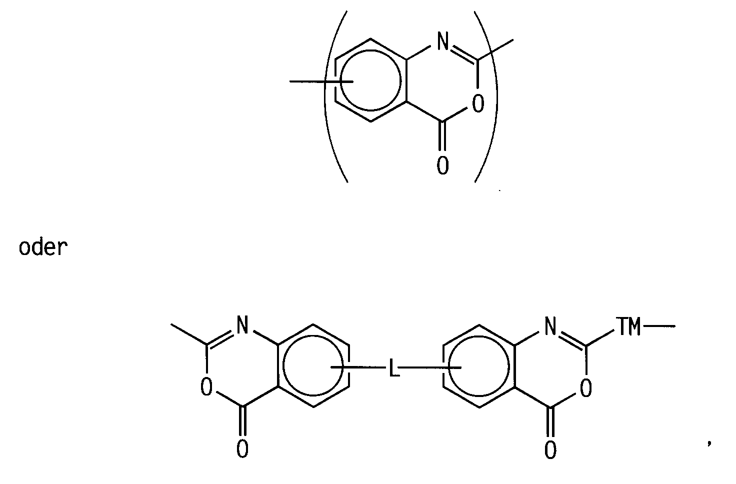 worin L und TM jeweils divalente organische Gruppen sind, die die Benzoxazinongruppen miteinander verbinden.

4. Blockcopolymer nach einem der Ansprüche 1 oder 2, wobei der thermoplastische Block in dem Blockcopolymer ein Polyoxadiazolpolymer ist, das jegliche der folgenden sich wiederholenden Einheiten enthält: 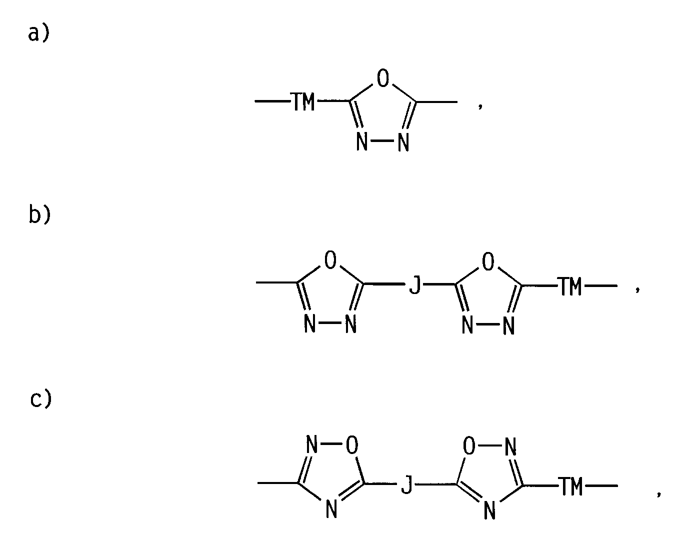 worin J und TM jeweils divalente organische Einheiten sind, die die Oxadiazolgruppen miteinander verbinden.

5. Blockcopolymer wie in einem der vorstehenden Ansprüche beschrieben, wobei das Blockcopolymer wenigstens 5 Gew.-% Polybenzazolblöcke und wenigstens 5 Gew.-% Polybenzoxazinon- oder Polyoxadiazolblöcke enthält.

6. Blockcopolymer wie in einem der vorstehenden Ansprüche beschrieben, wobei das Blockcopolymer weiterhin Blöcke eines zweiten thermoplastischen Polymers enthält.

7. Spinnlösung, die Blockcopolymere nach einem der Ansprüche 1 bis 6 und ein Lösungsmittel enthält, wobei die Spinnlösung optisch isotrop ist.

8. Geformter Gegenstand, der ein Blockcopolymer nach einem der Ansprüche 1 bis 6 enthält, wobei der geformte Gegenstand einer der folgenden ist:
(a) eine Faser,
(b) ein Film oder
(c) ein geformter Gegenstand
und wobei die mittlere Größe von phasengetrennten Domänen nicht mehr als 100 nm beträgt.

9. Granuläre Zusammensetzung, die ein Blockcopolymer nach einem der Ansprüche 1 bis 6 enthält, wobei die mittlere Größe von phasengetrennten Domänen nicht mehr als 100 nm beträgt und die mittlere Größe der Teilchen zwischen 1 µm und 500 µm liegt.

10. Verfahren zur Verwendung einer granulären Zusammensetzung nach Anspruch 9, wobei die granuläre Zusammensetzung in einer Form druckgegossen wird, um einen geformten Gegenstand auszubilden, wobei die mittlere Größe der phasengetrennten Domänen nicht mehr als 100 nm beträgt.

## Revendications

1. Copolymère à blocs, comprenant :
1) au moins un bloc de polymère de type polybenzazole, comportant en moyenne plus d'un motif répété,
et
2) au moins un bloc de polymère thermoplastique,
ce polymère thermoplastique étant un polymère de type polybenzoxazinone ou un polymère de type polyoxadiazole, et le copolymère à blocs ne comportant pas de polyimide.

2. Copolymère à blocs conforme à la revendication 1, dans lequel le bloc de polybenzazole comporte l'un des motifs répétés suivants :

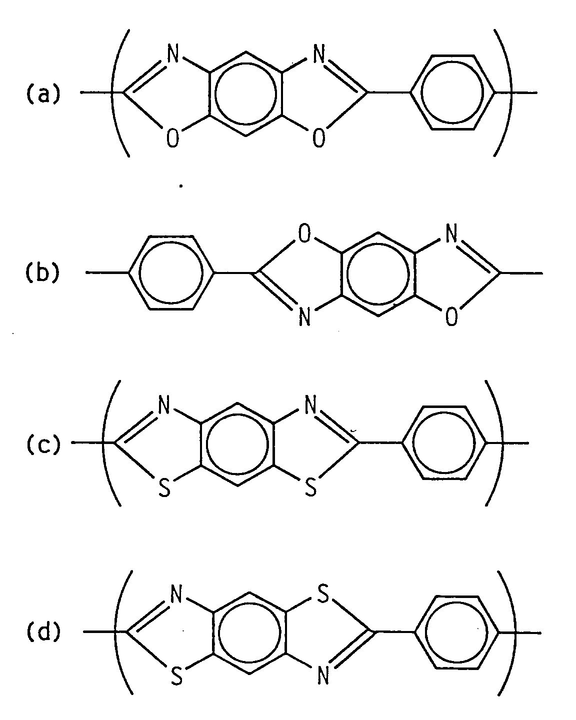

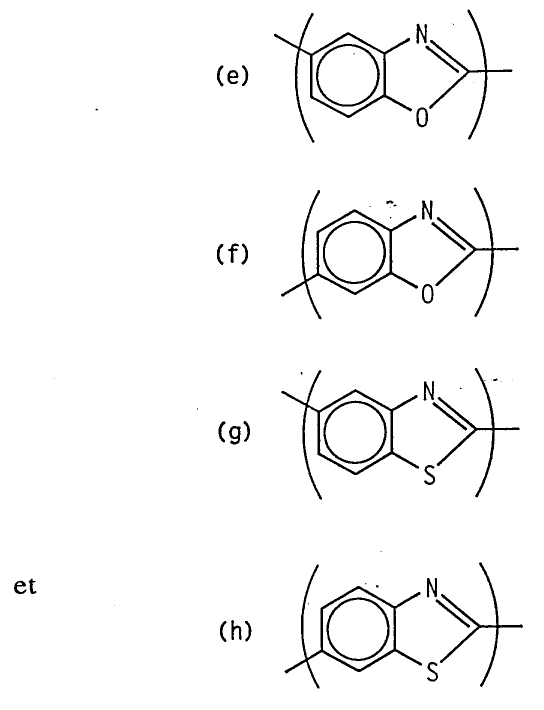

3. Copolymère à blocs conforme à l'une des revendications précédentes, dont ledit bloc thermoplastique est un polymère de type polybenzoxazinone qui comporte l'un des motifs répétés suivants : 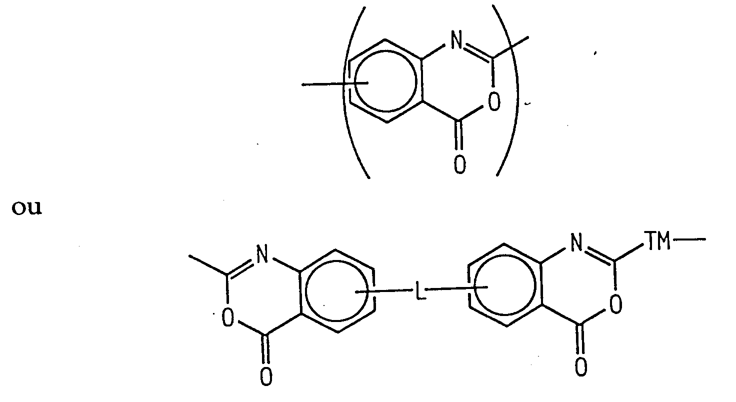 où L et TM représentent chacun un groupe organique divalent raccordant les groupes benzoxazinone.

4. Copolymère à blocs conforme à l'une des revendications 1 et 2, dont ledit bloc thermoplastique est un polymère de type polyoxadiazole qui comporte l'un des motifs répétés suivants : 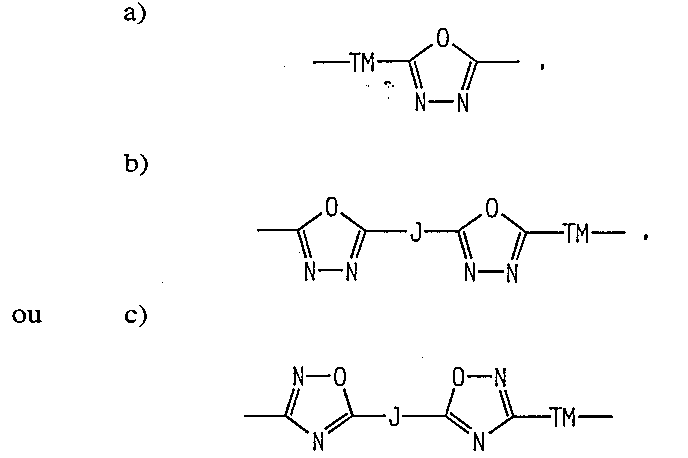 où J et TM représentent chacun un groupe organique divalent raccordant les groupes oxadiazole.

5. Copolymère à blocs conforme à l'une des revendications précédentes, qui contient au moins 5 % en poids de blocs de polybenzazole et au moins 5 % en poids de blocs de polybenzoxazinone ou de polyoxadiazole.

6. Copolymère à blocs conforme à l'une des revendications précédentes, qui comporte en outre des blocs d'un second polymère thermoplastique.

7. Solution à filer qui contient un solvant et un copolymère à blocs conforme à l'une des revendications 1 à 6, cette solution à filer étant optiquement isotrope.

8. Article façonné contenant un copolymère à blocs conforme à l'une des revendications 1 à 6, lequel article façonné est
a) un fibre,
b) un film,
ou
c) une pièce moulée,
et dans lequel la dimension moyenne des domaines de séparation de phase ne vaut pas plus de 100 nm.

9. Composition granulaire qui contient un copolymère à blocs conforme à l'une des revendications 1 à 6, dans laquelle la dimension moyenne des domaines de séparation de phase ne vaut pas plus de 100 nm et la dimension moyenne des particules vaut de 1 à 500 µm.

10. Procédé d'emploi d'une composition granulaire conforme à la revendication 9, selon lequel on moule la composition granulaire par compression, dans un moule, pour former une pièce moulée dans laquelle la dimension moyenne des domaines de séparation de phase ne vaut pas plus de 100 nm.
